# EUROPEAN PATENT APPLICATION

(11) **EP 4 456 488 A1**
(43) Date of publication of application: **30.10.2024**
(21) Application number: 23169368.0
(22) Date of filing: 24.04.2023
(51) Int. Cl.: H04L 12/403, G05B 19/418, H04L 12/46

(54) **MOTOR-ROLLER CONTROL PROXY**

(71) Applicant: Kyowa Europe GmbH, 42799 Leichlingen (DE); Industrial Software, 1618 Sofia (BG)
(72) Inventor: PETROV, Dimitar Ivanov, 1225 Sofia (BG); YANKOV, Nikola Aleksandrov, 1142 Sofia (BG); SUVANDZHIEV, Dimitar Hristov, 1750 / 1784 Sofia (BG); PETROV, Ivan Dimitrov, 1225 Sofia (BG); ICHIEDA, Kazuya, 673-0424 Miki City Hyogo Prefecture (JP); MALINA, Georg, 40237 Düsseldorf (DE)
(74) Representative: Cohausz & Florack

(57) **Abstract**

A motor-roller control proxy is disclosed as well as a central control unit and a conveyor system.

## Description

The subject matter relates to a motor-roller control proxy, in particular for a conveyor system, for instance for conveying goods, packages and the like. Moreover, the subject matter relates to a central control unit and a conveyor system comprising motor-driven conveyors driven by motor-rollers.

Motor-driven conveyor-rollers, also known as motor-rollers, comprise a roller body rotatably mounted about a roller axis. The roller body usually is a hollow tube. Within the roller body, the motor is arranged. The motor is an electric motor which is configured to generate a rotational movement about the roller axis between the axis and the roller body.

For the sake of understanding, in the following the term motor-roller can be used for the motor within the roller body alone, a drive unit comprising the motor and a corresponding control circuit for the motor within the roller body or the roller body comprising the motor or the drive unit. In the following the term motor can be used for the motor as such as well as the drive unit comprising the motor as such and a corresponding control circuit for the motor.

It is well known that motor-rollers are operated by a control unit, also known as controller, being arranged external, outside the roller body. The controller exchanges control signals with the motor inside the roller body. The controller may be referred to as motor-roller controller. The term controller will subsequently be used synonymously for motor-roller controller unless indicated otherwise.

Motor-driven conveyors driven by motor-rollers of this type are used in conveyor systems. In such conveyor systems, a single motor-roller is used to operate several roller bodies within a conveyor zone. Conveyor systems oftentimes have several conveyor zones through which an object to be conveyed passes one after the other. As has been said, within each conveyor zone, at least one motor-driven conveyor-roller operates several rollers.

A controller (i.e., motor-roller controller) has a wired power inlet (input power port) for receiving electric power, preferably DC power. However, the input power port may also be an AC port, in this case, on the controller there may be arranged a rectifier for converting the input AC power to DC power. Moreover, the controller has a wired motor-roller control port. The wired motor-roller control port is configured to provide the motor-roller with drive power. The motor can be fed through the motor-roller control port using for instance a pulse width modulation (PWM) signal to control at least the rotational speed of the motor.

In addition, status information and control signals can be exchanged between the motor-roller and the controller using the motor-roller control port. Status information and/or control signals can, inter alia, include actual motor speed, set motor speed, actual conveyor speed, set conveyor speed, actual rotational direction, set rotational direction, actual operation mode, set operation mode, temperature, error messages, gear ratio of the motor gear, serial number, article number, production date and or the like. In particular, the motor-roller control port is a four wired motor-roller control port in line with EP 3 100 340 B1.

A conventional controller comprises a wired I/O (Input/Output)-port. This I/O-port is configured to exchange control information with a central control unit for instance a central PLC (SPS)-control. The I/O-port can, for instance, be configured using a proprietary protocol. However, the I/O-port can also be configured using standardized I/O-protocols, for instance according to CAN, DeviceNet, Ethernet Powerlink, INTERBUS, Fieldbus, LIN, M-Bus, PROFIBUS, VARAN and the like. In addition to such a conventional controller, a wireless controller is known, which operates similar to the wired controller. The explanation for the wired and the wireless controllers can be used for both, with the exception that the I/O Bus or the wireless controller is a wireless bus, with appropriate wireless protocols.

The controller is configured to exchange motor-roller control signals with a motor-roller at the motor-roller control port, to exchange motor-roller status signals with the motor-roller at the motor-roller control port and to exchange motor-roller control signals for the motor-roller with a central control at the I/O-port. Exchange of the relevant control and status signals are well known and need no further description. It should be noted that all ports and inlets of the wired controller are preferably wired ports, requiring wiring between the motor-roller and the controller and be the controller and centralized control center. Wiring usually is necessary to provide stable communication in industrial environments. A wireless controller has also a wiring with the motor-roller and the power inlet, however, a wireless I/O port.

For the sake of understanding, the motor-roller controller, a.k.a. controller, may be arranged for controlling motor-rollers. As such, within the controllers, at least one microprocessor may be provided for operating the motor-rollers within a conveyor system and more particular for operating at least one motor-roller within a conveyor system.

Conveyor systems usually are constructed with several conveyor zones. That is, one conveyor zone is followed by the next conveyor zone. Within each conveyor zone at least one, preferably only one motor-roller is provided. At least two spatially neighboring motor-rollers may also be operated by a single motor-roller controller.

Preferably, every motor-roller or at least every second is controlled by a separate motor-roller controller. The motor-roller controllers are connected to each other and with a central controller using a serial bus.

A given motor-roller controller may be arranged to receive at least one motor-roller control message from a central control unit. Configuring both the central control unit and the motor-roller controllers may become an error-prone and lengthy process. After initial configuration, any changes to the configured conveyor system may require extensive adjustments to the programming of the central control unit and/or to the motor-roller controllers. Additionally, the motor-roller controllers may impose constraints on the central control unit limiting the choice of such central control units.

It is therefore one of the objects of the subject matter to increase simplicity and flexibility of the control architecture of conveyor systems comprising motor-rollers.

The object is solved by a motor-roller control proxy according to claim 1, a central unit according to claim 11 and a system according to claim 15.

According to a first exemplary aspect of the subject matter, a motor-roller control proxy is disclosed.

The motor-roller control proxy according to the subject matter is configured to perform the steps of the following method:
- receive at least one motor-roller control message from the central control unit, wherein the motor-roller control message contains a motor-roller controller indication and a motor-roller control command,
- transmit the motor-roller control command to a motor-roller controller indicated by the motor-roller controller indication.

The steps may be performed in the order as disclosed above or in the opposite order.

The motor-roller control proxy may for instance comprise a housing. For instance, the housing may be formed of metal, ceramic, plastic and/or combinations thereof.

The motor-roller control proxy may for instance be portable. For instance, the motor-roller control proxy may be movable by a human operator. Additionally or alternatively, the motor-roller control proxy may be fixable to at least one other component. For instance, the motor-roller control proxy may comprise at least one fixation means. Fixation means may for instance be formed as a hole in the housing through which a screw can be threaded, a hook, a magnet and/or combinations thereof.

The motor-roller control proxy may comprise at least one communication means. The motor-roller control proxy may particular be communicatively connectable to (e.g., by means of at least one of the at least one communication means) at least one motor-roller controller and/or to at least one central control unit. For instance, at least one of the at least one communication means may be a wired communication means. A wired communication means may comprise at least one connector that is connectable to at least one cable, in particular a data cable, for instance an RJ45 plug. For instance, at least one of the at least one communication means may be a wireless communication means. Wireless communication means may for instance comprise an infrared interface and/or an electromagnetic interface. Electromagnetic interface may for instance comprise a Wi-Fi interface, a Bluetooth interface, a Zigbee interface and/or combinations thereof.

According to an embodiment, the motor-roller control proxy may comprise at least two communication means.

The communication between the motor-roller control proxy and another entity (e.g., of the conveyor system) may for instance be realized as a packet-based communication. The another entity may for instance correspond to a at least one motor-roller controller and/or at least one central control unit. For instance, a packet-based protocol according to a packet-based communication standard such as Link Layer Discovery Protocol (LLDP), Profinet 10, EthernetIP, CAN, DeviceNet, Ethernet Powerlink, INTERBUS, Fieldbus, LIN, M-Bus, PROFIBUS, VARAN and/or combinations thereof may be used.

The motor-roller control proxy is configured to receive at least one motor-roller control message from a central control unit.

The motor-roller control message may for instance be structured as a packet according to a packet-based communication standard. The motor-roller control message may comprise at least one address field (for instance, in a header of the packet) comprising at least one address of at least one recipient. For instance, the motor-roller control message may be addressed to the motor-roller control proxy. In other words, the motor-roller control message may comprise an address (e.g., Media Access Control (MAC) address and/or an Internet Protocol (IP) address) of the motor-roller control proxy.

According to an embodiment, the motor-roller control proxy may act as an opaque layer between the motor-roller controllers on the one hand and the central control unit on the other hand. The central control unit may only communicate with the motor-roller control proxy. The motor-roller control proxy may use the received data from the central controller and may transpose this data into individual messages for the motor-roller controllers. The message from the central controller may be split into one or more messages addressed to the individual motor-roller controllers. In the other direction, messages sent from the individual motor-roller controllers to the motor-roller control proxy may be bundled into one message within motor-roller control proxy and sent from the motor-roller control proxy to the central controller as one single message.

The motor-roller control message may comprise at least one data field. The data field may comprise at least one piece of information transmitted to the recipient, and may be located in the so-called payload of the packet. Data fields in the payload of a given motor-roller control message are separated from address fields in the header of the motor-roller control message.

The motor-roller control message comprises (e.g., contains) at least one motor-roller controller indication. The motor-roller controller indication may for instance correspond to an address of the motor-roller controller, in particular an address compatible with a packet-based communication standard used for communication between the motor-roller control proxy and at least one motor-roller controller.

For instance, the motor-roller controller indication received from the central control unit is unsuitable for the communication standard used for communication between the motor-roller control proxy and at least one motor-roller controller. In this case, the motor-roller control proxy may be configured to translate the received motor-roller controller indication to a translated motor-roller controller indication.

For instance, the motor-roller controller indication may be comprised in a payload of the motor-roller control message. In particular, the at least one address field and/or the header of the motor-roller control message may be free of the motor-roller controller indication. Instead, the motor-roller controller indication may (e.g., only) be comprised in a one of the at least one data field (i.e., in the payload). In particular, within the data field more than one, in particular a plurality of motor-roller controller indications may be comprised or more than one, in particular a plurality of data fields each comprising a motor-roller controller indication may be provided. Thus, more than one motor roller controller can be addressed through the data field of the motor-roller control message via the proxy. The proxy may be provided intermediate the motor-roller controller(s) and the central control unit.

According to an example, the motor-roller controller indication is partially contained in the header and partially in the payload of the motor-roller control message.

According to an example, the motor-roller control message may contain at least two addresses. The first address corresponds to the motor-roller control proxy and may for instance be contained in a header of the motor-roller control message. The second address corresponds to a motor-roller controller and may for instance be contained in a data field (i.e., payload) of the motor-roller control message.

The motor-roller control message further comprises a motor-roller control command. For instance, the motor-roller control command may be tailored to a motor-roller controller, in particular to at least one of the at least one motor-roller controllers communicatively connected with the motor-roller control proxy. In particular, the motor-roller control command is directed to the motor-roller controller indicated by the motor-roller controller indication.

The motor-roller control command may be comprised in the payload of the motor-roller control message. For instance, the motor-roller control message may comprise in its payload a combination of at least one motor-roller controller indication and at least one corresponding motor-roller control command. In other words, the payload may comprise the packet contents of a typical packet according to a packet-based communication protocol directed from the central control unit to the motor-roller controller directly, i.e. without the motor-roller control proxy. These packet contents are wrapped within (e.g., the payload/ the data fields of) a communication packet directed from the central control unit to the motor-roller control proxy.

The motor-roller control proxy is further configured to transmit the motor-roller control command to a motor-roller controller. The motor-roller control command may be transmitted by a packet-based communication protocol used between the motor-roller control proxy and at least one of the at least one motor-roller controllers. The motor-roller control command may then for instance be transmitted as a payload of a packet sent by the motor-roller control proxy to the motor-roller controller.

The motor-roller control command may be transmitted to a motor-roller controller indicated by the motor-roller controller indication.

For instance, the motor-roller controller indication may correspond to an address of a respective motor-roller controller. The motor-roller control proxy may be configured to first receive the motor-roller controller indication from the central unit and subsequently use the received motor-roller controller indication to direct the motor-roller control command to the appropriate motor-roller controller.

The motor-roller control proxy may additionally or alternatively utilize the motor-roller controller indication to derive at least one property of the indicated motor-roller controller. The derived property may for instance correspond to at least one topology information. The derived property may be utilized by the motor-roller control proxy to transmit the motor-roller control command to the motor-roller controller indicated by the motor-roller controller indication.

Each motor-roller controler may report its two immediate cable neighbors (i.e. motor-roller controllers) to the motor-roller control proxy. These may be the MAC addresses of the neighboring motor-roller controllers. The motor-roller control proxy may then use this information into order and from the knowledge of the neighboring motor-roller controller of each motor-roller controller, the motor-roller controller proxy may determine the exact topology of the connected motor-roller controllers, i.e. by sorting algorithms.

The motor-roller control proxy may transmit the motor-roller control command by means of a packet-based communication protocol used for communication between the motor-roller control proxy and the motor-roller controller.

According to an embodiment, a communication protocol used for communication between the motor-roller control proxy at the motor-roller controller may be different from or identical to a communication protocol used for communication between the central control unit and the motor-roller control proxy.

By introducing the motor-roller control proxy, the maintenance and initial configuration of the conveyor system are simplified. The motor-roller control proxy may serve as an abstraction barrier between the central control unit and the motor-roller controllers. The central control unit is not hardwired to the different motor-roller controllers and can be agnostic to any specific addressing requirements and required communication protocols of the motor-roller controllers. At the side of the central control unit, the motor-roller control proxy allows to utilize a larger variety of devices than previously possible. In particular, central control units which are not originally capable of handling a large number of motor-roller controllers and central control units requiring specific communication interfaces not suited for motor-roller controllers may be used in conjunction with the motor-roller control proxy. Also at the level of motor-roller controllers, the motor-roller controller proxy may allow for a heterogeneous field of mutually distinct motor-roller controllers and control them by appropriate protocols in a seemingly unified addressing scheme as perceived by the central control unit.

According to an embodiment, the motor-roller control message is addressed to the motor-roller control proxy.

For instance, the motor-roller control message may comprise (e.g., in at least one of its address field) an indication (e.g., an address) of the motor-roller control proxy.

Additionally or alternatively, the motor-roller control message may be received by the motor-roller control proxy by a catch-all functionality wherein the motor-roller control proxy acts as the recipient of motor-roller control messages transmitted by the central control unit regardless of the respective recipient address indicated by the motor-roller control message (e.g., in an address field/ in a header).

According to an embodiment, the total number of motor-roller controllers that are communicatively connected and/or connectable to the motor-roller control proxy may exceed the total number of distinct addresses accessible by a communication protocol used between the central control unit and the motor-roller control proxy.

Additionally or alternatively, a communication protocol used for communication between the motor-roller control proxy and the motor-roller controllers may allow a total number of addresses which is higher than the total number of distinct addresses accessible by a communication protocol used between the central control unit and the motor-roller control proxy.

According to an embodiment, the motor-roller control proxy is configured to obtain a motor-roller controller topology indication of at least one of the at least one motor-roller controller.

For instance, the motor-roller control proxy may obtain the motor-roller controller topology indication by means of an automatic screening process. For instance, the motor-roller control proxy may obtain such information via the LLDP protocol.

Additionally or alternatively, the motor-roller control proxy may be programmed, for instance by another entity of the conveyor system and/or by an operator, with a motor-roller controller topology indication.

A topology indication may for instance comprise an indication of a conveyor segment, in which the motor-roller controller and/or at least one of the motor-roller is controlled by the motor-roller controller are situated. The motor-roller controller topology indication may for instance alternatively or additionally comprise an indication of a relative and/or absolute position of the motor-roller controller and/or of at least one of the motor-roller controlled by the motor-roller controller within a conveyor segment and/or conveyor system. A relative position may for instance be given relative to the position of at least one other motor-roller controller and/or of at least one of the at least one motor-roller controlled by the motor-roller controller.

For instance, the motor-roller control proxy may store motor-roller controller topology indication in the form of a graph that represents the conveyor system.

According to an embodiment, a given motor-roller controller topology indication is inferred by the motor-roller control proxy.

For instance, the motor-roller control proxy may be configured to use a suitable communication protocol (e.g., the LLDP protocol), measurable quantities such as signal strength and/or round trip time (RTT) of at least one motor-roller controller, addresses and/or indications of at least one motor-roller controller and/or combinations thereof to infer the motor-roller controller topology indication.

According to an embodiment, the motor-roller controller topology indication is obtained from the at least one motor-roller controller. For instance, the motor-roller controller may be configured to report its motor-roller controller topology indication to the motor-roller controller proxy and/or to the central control unit.

According to an embodiment, the motor roller control proxy is configured to assign a motor-roller controller indication to at least one of the at least one motor-roller controller.

For instance, the motor-roller control proxy may be configured to assign a unique motor-roller controller indication to the motor-roller controllers communicatively connected and/or connectable to the motor-roller control proxy.

According to an embodiment, the motor roller control proxy is configured to obtain a motor-roller controller indication from at least one of the at least one motor-roller controller.

For instance, the motor-roller control proxy is configured to receive a motor-roller controller indication from a respective motor-roller controller. For instance, the motor-roller controller may be configured to report its motor-roller controller indication to a motor-roller control proxy and/or to a central control unit.

According to an embodiment, the motor roller control proxy is configured to obtain a motor-roller controller indication from the central unit.

The motor-roller control proxy may be configured, according to an embodiment, to both obtain a first motor-roller controller indication from a respective motor-roller controller and/or from the central unit and also subsequently assign a second motor-roller control indication to the motor-roller controller. For instance, in this way, a first address space defined by the entirety of first motor-roller indications, and a second address space defined by the entirety of second motor-roller indications may be curated independently of one another. In particular, the second address space may be larger i.e. comprise more possible addresses compared to the first address space. An address of the second address space may be referred to as a virtual address. The motor-roller control proxy may store a set of associations between the first and the second indication respectively.

A motor-roller indication (be it assigned by the motor-roller control proxy or obtained) may subsequently be used (here and in the above and the following) for addressing motor-roller control commands to the motor-roller controllers. For instance, the motor-roller controller indication may be used as an address to direct the motor-roller control command to the motor-roller controller. Additionally or alternatively, the motor-roller control indication may be used to retrieve motor-roller controller topology information which may then be used for routing a motor controller, and to the appropriate motor-roller controller.

According to an embodiment, the motor roller control proxy is configured to transmit at least one of a motor-roller controller indication or a motor-roller controller topology information of at least one of the at least one motor-roller controller to the central control unit.

By transmitting motor-roller controller indications and/or motor-roller controller topology information to a central unit, the motor-roller control proxy may enable the central control unit to access individual motor-roller controllers by means of using the appropriate motor-roller controller indication. In particular, when the motor-roller control proxy assigned at least one motor-roller controller indication by itself, the central unit may be informed of the assigned motor-roller controller indications.

For instance the motor-roller controller indications may be chosen in order to be transmittable in a motor-roller control message transmitted by the central control unit. For instance, the motor-roller control proxy may select one data field and/or two or more data fields of motor-roller control messages constructed by the central control unit. It may then, for a given motor-roller controller, assign a combination of values of the at least one or two or more data fields within the motor-roller controller message to a given motor-roller controller as a motor-roller controller indication.

According to an embodiment, the motor roller control proxy is configured to generate and/or store a set of associations between a respective motor-roller controller indication as received in a motor-roller control message from the central control unit and a respective topology information of at least one of the at least one motor-roller controller. The associations may be used to translate between a respective motor-roller controller indication and a respective motor-roller topology information. For instance, if motor-roller control commands transmitted by the motor-roller control proxy to the motor-roller controllers are directed by topology information, the set of associations may be used to translate from a motor-roller controller indication as received from the central unit to a motor-roller controller topology information required for correct routing of the motor-roller control command.

According to an embodiment, the motor roller control proxy is configured to generate and/or store a set of associations between a respective first motor-roller controller indication (e.g., assigned by the motor-roller controller proxy) as received in a motor-roller control message from the central control unit and a respective second motor-roller controller indication (e.g., an address, e.g., obtained from a motor-roller controller) of at least one of the at least one motor-roller controller. The second motor-roller controller indication may be used to relay the motor-roller control command received in the motor-roller control message to the correct motor-roller controller. The first indication may be used to identify the targeted motor-roller controller based on the received motor-roller control message. In other words, the first motor-roller controller indication may be used by the central control unit is to indicate a motor-roller controller and the second motor-roller controller indication may be used by the motor-roller control proxy to transmit motor-roller control commands to the correct motor-roller controller.

An association may for instance correspond to a link between a first information and a second information. The first information may for instance be the motor-roller controller indication, while the second information may be the respective topology information of the respective motor-roller controller.

An association may for instance correspond to a row of a table containing at least two columns, an edge in a graph between the first node and a second node, and an array, a list and/or combinations thereof.

According to an embodiment, transmitting the motor-roller control command to the motor-roller controller indicated by the motor-controller indication is at least partially based on the set of associations.

According to an embodiment, the motor-roller control proxy is configured to obtain a total number of motor-roller controllers to which it is communicatively connected and/or connectable.

For instance, the motor-roller control proxy may obtain such information from the central unit. Additionally or alternatively, the motor-roller proxy may be programmed with the total number of motor-roller controllers.

According to an embodiment, the motor-roller control proxy is configured to disconnect from at least one or from all of the motor-roller controllers in case the number of associations stored does not match the obtained total number of motor-roller controllers.

The motor-roller control proxy may assert that the number of associations stored in the set of associations does (e.g., at all times) coincide with the number of motor-roller controllers to which the motor-roller control proxy is connected and/or connectable to. Otherwise, the motor-roller control proxy may misguide the motor-roller control commands received from the central control unit and the conveyor system may malfunction.

According to a second aspect of the subject matter, a central control unit for a motor-roller conveyor system is disclosed.

The central control unit is configured to perform and/or control the steps of the following method:
- construct a motor-roller control message, wherein the motor-roller control message comprises a motor-roller controller indication and a motor-roller control command and
- transmit the motor-roller control message to a motor-roller control proxy.

According to an aspect of the subject matter, this method may be performed and/or controlled by an apparatus, for instance a server, a PC, a laptop, a modem, a router, and/or combinations thereof. Alternatively, this method may be performed and/or controlled by more than one apparatus. Alternatively, the method may for instance be performed and/or controlled by an electronic device, e.g. a central control unit in a conveyor system. For instance, the method may be performed and/or controlled by using at least one processor of the electronic device.

According to a further exemplary aspect, a computer program is disclosed, the computer program when executed by a processor causing an apparatus, for instance a server, a computer, a PC, a laptop, a control unit or an integrated circuit of an embedded control apparatus, to perform and/or control the actions/steps of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further exemplary aspect, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

The central control unit is configured to construct a motor-roller control message.

The motor-roller control message comprises a motor-roller controller indication. The motor-roller controller indication may for instance be comprised in a payload, for instance a data field, of the motor-roller control message. The motor-roller control message may for instance comprise and/or correspond to a packet of a packet-based communication protocol.

The motor-roller control message for the comprises a motor-roller control command. The motor-roller control command may be comprised in a payload, in particular a data field, of the motor-roller control message.

According to an example, both the motor-roller controller indication and the motor-roller control command may be comprised in the payload of the motor-roller control message.

Additionally or alternatively, the motor-roller controller indication may at least partially be comprised by an address field of the motor-roller control message while for instance the motor-roller control command is comprised in the payload. According to an embodiment, each internal motor roller controller that can be connected to the motor-roller controller proxy may have an individual address. This individual address may be at least individual amongst all motor-roller controllers that are connected in common to the motor-roller controller proxy. The address may be reserved by the motor-roller controller proxy. The motor-roller controller proxy may assign an individual address to each motor-roller controller one connected to the motor-roller controller proxy. The individual addresses or a mapping may be known within the central controller. For instance, a motor-roller controller 1 may have a first data offset according to its individual address, the motor-roller controller 2 may have a second data offset according to its individual address, etc.

For instance if the motor-roller control proxy is configured in a catch-all approach and receives all data packets regardless of the recipient address in the header, the recipient address may be used to at least partially indicate the motor-roller controller indication.

The motor-roller indication may be partially transmitted in a header and partially in a payload of a given motor-roller control message.

For instance, the motor-roller control message may further contain an indication of the motor-roller control proxy. For instance, the motor-roller control message may be addressed to the motor-roller control proxy. For instance, an indication and/or an address of the motor-roller control proxy may be comprised by an address field (e.g., in the header) of a data packet (i.e., a motor-roller control message) sent by the central control unit to the motor-roller control proxy.

A motor-roller control message may contain at least two addresses. The first address corresponds to the motor-roller control proxy. The second address corresponds to a motor-roller controller. The first address may be contained in an address field of the motor-roller control message. The second address may be comprised by a data field of the motor-roller control message.

The central control unit is further configured to transmit the constructed motor-roller control message to a motor-roller control proxy.

The central control unit may be configured to communicate with at least one motor-roller control proxy by means of a communication protocol, in particular a packet-based communication protocol, for instance Link Layer Discovery Protocol (LLDP), Profinet 10, EthernetIP, CAN, DeviceNet, Ethernet Powerlink, INTERBUS, Fieldbus, LIN, M-Bus, PROFIBUS, VARAN and/or combinations thereof.

According to an embodiment, the central control unit is free of direct communicative links to motor-roller controllers.

A direct communicative link may for instance be characterized by not comprising an intermediary. For instance, the motor-roller control messages may (e.g., all) be addressed to the motor-roller control proxy. In this case, a direct communicative link exists between the central control unit and the motor-roller control proxy. On the other hand, the central control unit may not have any such direct communicative link to any motor-roller controller.

According to an embodiment, the central control unit is configured to control at least one motor-roller controller via the motor-roller control proxy.

By transmitting at least one motor-roller control message to the motor-roller control proxy, the central control unit is able to control at least one motor-roller controller without being directly communicatively connected to it.

According to an embodiment, the central control unit is configured to control at least one motor-roller controller indicated by a motor-roller controller indication.

For instance, the central control unit is agnostic of the motor-roller control proxy. I.e. the central control unit is (at least essentially) programmed as if it were directly connected to the motor-roller controllers. The sole difference may be that the payload of a given motor-roller control message contains an indication of a motor-roller controller. Optionally, an address field (e.g., header) of the motor-roller control message may be altered if a motor-roller control proxy is used as opposed to when the central control unit directly communicates with at least one of the motor-roller controllers. The header may comprise an indication of the motor-roller control proxy.

According to an example implementation, the motor-roller controller indication may be comprised by a separate data field in the motor-roller control message.

According to an example implementation, additionally or alternatively, the value of an (e.g., existing) data field (e.g., in the payload) may be used to indicate the motor-roller controller indication.

For instance, a data field originally used to indicate a motor-roller index per motor-roller controller may be used to indicate the motor-roller controller. For instance, a central control unit may allow to address N (e.g., 1000) motor-roller controllers directly. Per motor-roller controller, a possible M (e.g., 100) motor rollers may be controlled. A data field may comprise an index m (1<= m <= M) that indicates the motor-roller of a given motor-roller controller for which the motor-roller control command comprised in the motor-roller control message is intended. The central control unit may be configured to segment the indices inside the motor-roller index field m into chunks of 10 values (e.g., 1-10, 11-20 and so on) wherein each chunk will be interpreted by the motor-roller control proxy to correspond to a different motor-roller controller. E.g. a combination of motor-roller controller index 1 and motor roller index 24 corresponds to the combination (motor-roller controller index 1, motor-roller chunk 3, motor roller 4). A possible address space of MxN motor-roller controllers is achieved, in our example 1000*100/10 = 10,000 instead of only 1000 addressable motor-roller controllers. It is to be understood that different data fields may be used and the above only serves as an illustrative example implementation.

Through all of the above process, the central control unit is not required to understand (i.e., be programmed to take into account) the logic behind the addressing scheme and the exact signification of the different field values. From perspective of the central control unit, a very large number of motor rollers per motor-roller controller seems to be used. The motor-roller control proxy will translate this understanding of the central control unit and will redirect the motor-roller control commands according to its internal mapping. Such mapping may for instance correspond to a set of associations between motor-roller controller indication and motor-roller topology information or a set of associations between a first motor-roller controller indication (as used by the central control unit) and motor-roller topology information (as used by the motor-roller control proxy).

According to an embodiment, the central control unit is configured to receive at least one of an motor-roller controller indication or a motor-roller controller topology information of at least one motor-roller controller from the motor-roller control proxy.

In this way, the central control unit may be configured to address the motor-roller controllers in a way that is understood by the motor-roller control proxy which will then be able to use the motor-roller controller indications (e.g., addresses) received from the central unit to relay the motor-roller control commands to the appropriate motor-roller controllers.

According to a third exemplary aspect of the subject matter, the system is disclosed, the system comprising
- at least one motor-roller controller,
- a central control unit according to the second exemplary aspect, and
- at least one motor-roller control proxy according to the first exemplary aspect.

The central control unit is communicatively connected with the at least one motor-roller control proxy. The motor-roller control proxy is communicatively connected to at least one of the at least one motor-roller controller. The central control unit is able to control at least one of the at least one motor-roller controller via the motor-roller control proxy.

According to an aspect of the subject matter, this method may be performed and/or controlled by an apparatus, for instance a PLS, server, a PC, a laptop, a modem, a router, and/or combinations thereof. Alternatively, this method may be performed and/or controlled by more than one apparatus. Alternatively, the method may for instance be performed and/or controlled by an electronic device, e.g. a motor-roller control device in a conveyor system. For instance, the method may be performed and/or controlled by using at least one processor of the electronic device.

According to a further exemplary aspect, a computer program is disclosed, the computer program when executed by a processor causing an apparatus, for instance a PLC, a server, a computer, a PC, a laptop, a control unit or an integrated circuit of an embedded control apparatus, to perform and/or control the actions/steps of the method according to the first exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., only) Memory (ROM) or hard disk of a computer, or be intended for distribution of the program, like an optical disc.

According to a further exemplary aspect, an apparatus is disclosed, configured to perform and/or control or comprising respective means for performing and/or controlling the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

These and other aspects of the subject matter will be explained more detail with reference to the following figure. In the figure show:
- Fig. 1: a central control unit illustrating an embodiment of the second and third exemplary aspect;
- Fig. 2: a motor-roller control proxy illustrating an embodiment of the first and third exemplary aspect;
- Fig. 3: a motor-roller controller according to embodiments;
- Fig. 4: a conveyor segment illustrating an embodiment according to all exemplary aspects;
- Fig. 5: a schematic diagram of a conveyor system comprising a plurality of controllers illustrating an embodiment according to all exemplary aspects.

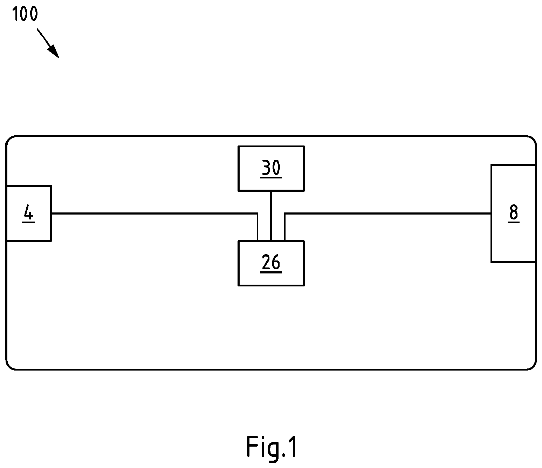

Fig. 1 shows a central control unit 100. The central control unit 300 may be configured to control at least one for motor-roller controller. The central control unit 100 has a power inlet 4. The power inlet 4 (input power port) is for instance a DC-power inlet 4, in particular 12V or 24V power inlet, may however also be an AC inlet. Power inlet 4 receives the electric power for operating the central control unit 100.

The central control unit 100 has an I/O-port 8. I/O-port 8 can be a communication port for wired and/or wireless communication, for instance according to an industry standard, in particular a packet-based communication standard as mentioned above. Moreover, I/O-port 8 can support any proprietary protocol. Via port 8, control signals and/or status information can be exchanged between the central control unit 100 and a motor-roller controller and/or a motor-roller control proxy.

The central control unit 100 further has a central processor 26 which is connected to the power inlet 4 and the I/O-port 8. The central processor 26 can be programmed. The programming may be understood as setting parameters for the motor-roller. According to the programming, a motor-roller controller may be instructed via the I/O-port 8 to control the motor-roller in a certain manner, e.g., to rotate in a certain direction at a certain speed. Any other parameters as described above can be parameterized and programmed. The processor 26 can be programmed to operate according to any of the methods disclosed herein.

It is possible to set the parameters of central control unit 100 and read out status information from controller 300 via port 8. In addition, central control unit 100 may have a memory 30.

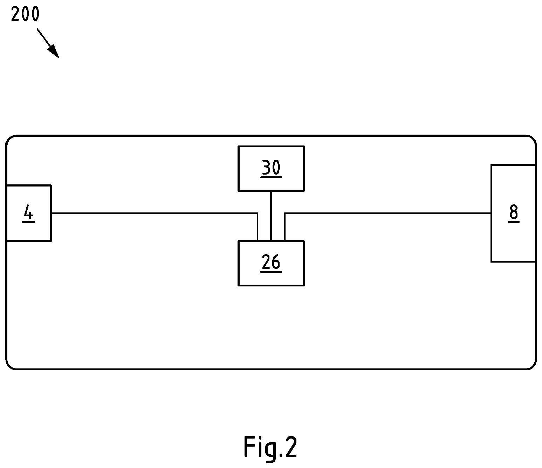

Fig. 2 shows a motor-roller control proxy 200. The motor-roller control proxy 200 may be configured to receive motor-roller control messages from a central control unit 100 and transmit motor-roller control commands comprised by the motor-roller control messages to at least one for motor-roller controllers. The motor-roller control proxy 200 has a power inlet 4. The power inlet 4 (input power port) is for instance a DC-power inlet 4, in particular 12V or 24V power inlet, may however also be an AC inlet. Power inlet 4 receives the electric power for operating the motor-roller control proxy 200.

The motor-roller control proxy 200 has an I/O-port 8. I/O-port 8 can be a communication port for wired and/or wireless communication, for instance according to an industry standard, in particular a packet-based communication standard as mentioned above. Moreover, I/O-port 8 can support any proprietary protocol. Via port 8, control commands and/or control messages can be exchanged between the motor-roller control proxy 200 and a motor-roller controller 300 and/or a central control unit 100.

The motor-roller control proxy 200 further has a central processor 26 which is connected to the power inlet 4 and the I/O-port 8. The central processor 26 can be programmed. The programming may be understood as setting the associations between motor-roller indications and the respective information required to relay the motor-roller control commands to the motor-roller controllers. Such information may in particular comprise a motor-roller topology information and/or a further motor-roller controller indication. According to the programming, a motor-roller control proxy may relay motor-roller control commands comprised in motor-roller control messages obtained from a central control unit 100 via the I/O-port 8 to a motor-roller controller. The motor-roller control command may then cause the motor roller to rotate in a certain manner, e.g., to rotate in a certain direction at a certain speed. Any other parameters as described above can be parameterized and programmed. The processor 26 can be programmed to operate according to any of the methods disclosed herein.

It is possible to set the parameters of motor-roller control proxy 200 and read out status information from controller 300 via port 8. In addition, motor-roller control proxy 200 may have a memory 30. The set of associations may for instance be stored in the memory 30.

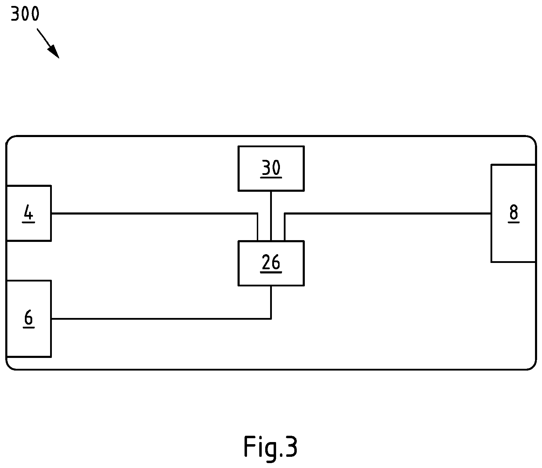

Fig. 3 shows a conventional (e.g., wired) motor-roller controller 300 for motor-rollers. The controller 300 has a power inlet 4. The power inlet 4 (input power port) is a DC-power inlet 4, in particular 12V or 24V power inlet, may however also be an AC inlet. Power inlet 4 receives the electric power for operating the controller 300. The power inlet 4 may also receive the electric power for operating a motor-roller.

A motor-roller can be connected to a motor-roller control port 6. Motor-roller control port 6 has at least two, preferably four connectors for connecting the motor-roller. Via the motor-roller control port 6 the motor-roller may at least be supplied with electrical energy. In addition, the motor-roller may be controlled by exchanging control signals and/or status information signals via the motor-roller control port 6. Control of motor-rollers as such is well known and will not be described in more detail.

The controller 300 has an I/O-port 8. I/O-port 8 can be a communication port for wired and/or wireless communication, for instance according to an industry standard, in particular a packet-based communication standard as mentioned above. Moreover, I/O-port 8 can support any proprietary protocol. Via port 8, control signals and/or status information can be exchanged between the controller 300 and a central control unit and/or a motor-roller control proxy.

The controller 300 further has a central processor 26 which is connected to the power inlet 4, the motor-roller control port 6 and the I/O-port 8. The central processor 26 can be programmed. The programming may be understood as setting parameters for the motor-roller. According to the programming, the motor-roller is instructed via motor-roller control port 6 to at least rotate in a certain direction at a certain speed. Any other parameters as described above can be parameterized and programmed. The processor 26 can be programmed to operate according to any of the methods disclosed herein.

It is possible to set the parameters of controller 300 and read out status information from controller 300 via port 8. In addition, controller 300 may have a memory 30.

During operation, central processor 26 outputs control signals for a motor-roller via motor-roller control port 6. The signals output, the amperage as well as the voltage of the output signals and the like depend on settings (parameters) of controller 300, which are according to the methods described herein. In particular, processor 26 may be programmed to obtain first values from amperage sensors. Moreover, during operation, central processor 26 reads out status information from the motor-roller via motor-roller control port 6.

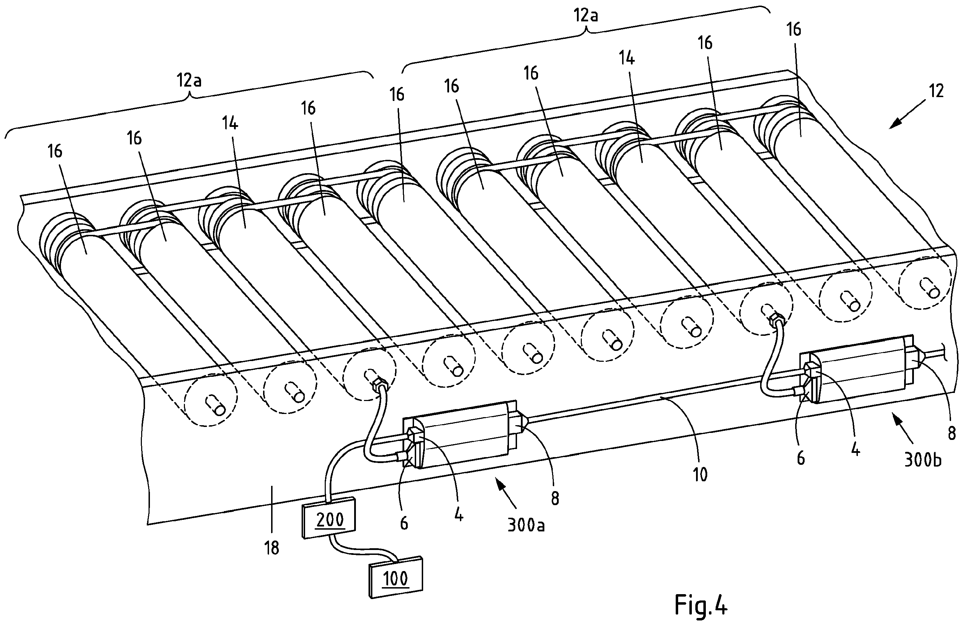

A conveyor segment as illustrated in Fig. 4 may comprise motor-rollers 14 and rollers 16. A conveyor line 12 may have two or more conveyor zones 12a. Within each conveyor zone 12a, one motor-roller 14 is mechanically coupled with at least one, preferably between two to seven rollers 16, in particular by V-belts or poly-V-belts or the like. Other mechanical couplings are also possible.

A motor-roller 14 is rotatable arranged on a rack 18 and comprises a motor within a hollow tube. The motor within the hollow tube is connected to the controller 300 via its motor-roller control port 6.

For each of these zones 12a, a separate controller 300 is provided controlling the respective motor-roller 14. The controllers 300 are connected to power and a control bus via their power inlets 4 and I/O-ports 8.

The motor-roller controllers 300a and 300b are connected via a bus connection 10. Control commands may be relayed through a series of motor-roller controllers 300, until they find the recipient with the right motor-roller controller indication.

The motor-roller controllers 300a, 300b are connected to a motor-roller control proxy 200. The motor-roller control proxy 200 is communicatively connected to a central control unit 100. The central control unit 100 controls the motor-roller controllers 300a, 300b via the motor-roller control proxy 200.

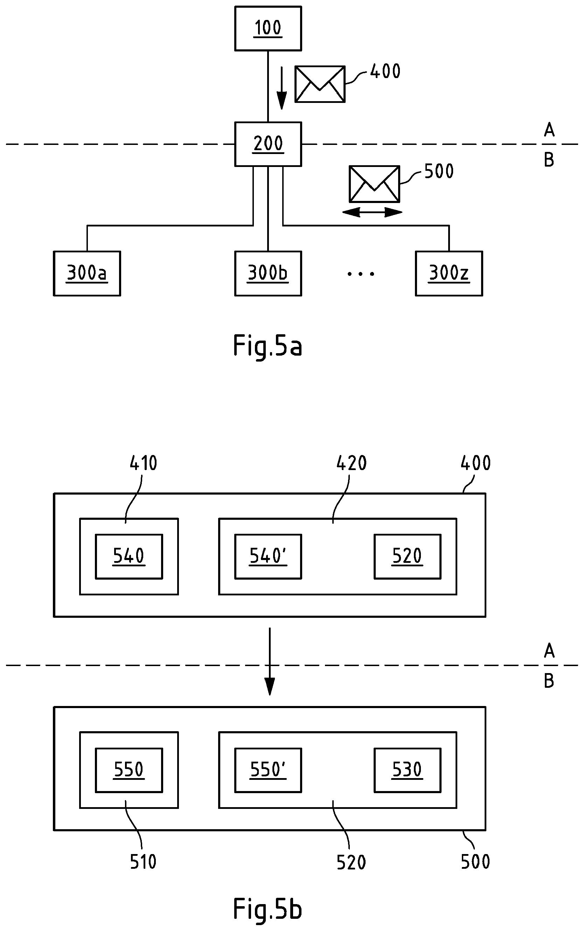

Fig. 5a illustrates a schematic control architecture comprising a central control unit 100, a motor-roller control proxy 200 and a plurality of motor-roller controllers 300a, 300b, ..., 300z.

A dashed line separates to addressing spheres A and B. The motor-roller control proxy 200 translates motor-roller control indications received from the central control unit 100 to respective information (e.g. motor-roller controller topology information or a second motor-roller controller indication) required to guide the motor-roller control commands comprised by the motor-roller control messages 400 received from the central control unit 100 to the appropriate motor-roller controller 300.

Within the addressing sphere A, all motor-roller control messages 400 transmitted by the central control unit 100 are received by the motor-roller control proxy 200. Even though there is only one recipient (the motor-roller control proxy 200), the central control unit 100 may still use a bus system and/or a packet-based communication protocol for communication with the motor-roller control proxy 200.

Within the addressing sphere B, the motor-roller control proxy 200 transmits motor-roller control commands 520 two the motor-roller controllers 300a, 300b, ..., 300z.

Fig. 5b illustrates a motor-roller control message 400 within the addressing sphere A and a data package 500 comprising a motor-roller command 530 within the addressing sphere B. The motor-roller control message 400 may comprise a header 410 comprising at least one address field and a payload 420 comprising at least one motor-roller control command 530.

The address field 410 of the motor-roller control message 400 may comprise a motor-roller controller indication 540. Additionally or alternatively, the payload 420 of the motor-roller control message 400 may comprise an indication 540' of a motor-roller controller.

The motor-roller control proxy 200 receives the motor-roller control message 400 and transforms it into a data package 500 comprising the motor-roller control command 530.

The data package 500 may comprise the motor-roller control command 530 in a payload 520 and may further comprise a motor-roller controller indication 550, 550' in a header 510 and/or in the payload 520. Instead of or in addition to the motor-roller controller indication 550, the data package 500 contained in motor-roller control command 530 may comprise a topology indication.

The motor-roller controller indication 550 in the addressing sphere B may differ from the motor-roller controller indication 540 in the addressing sphere A. For instance, the motor-roller control proxy 200 may derive a motor-roller controller indication 550, 550' from the motor-roller controller indication 540, 540', for instance based on the set of associations stored within the motor-roller controller proxy 200.

Alternatively, the motor-roller controller indication 550, 550' in the addressing sphere B may be identical to the motor-roller controller indication 540, 540' in the addressing sphere A. For instance, the motor controller indication 540' may be transported inside the payload 420 of the motor-roller control message 400 in the addressing sphere A. This motor-roller controller indication 540' may then be relocated to the header 510 of the data package transporting the motor-roller command 530 to the motor-roller controller 300.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Having the same meaning as the expression "A and/or B", the expression "at least one of A or B" may be used herein. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are (e.g., only) exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of (e.g., only) one of the enumerated features is possible. The specific combination of all subsequently enumerated features may as well be considered. Also, a plurality of (e.g., only) one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

## Claims

1. A motor-roller control proxy, wherein the motor-roller control proxy is configured to
- receive at least one motor-roller control message from a central control unit, wherein the motor-roller control message contains a motor-roller controller indication and a motor-roller control command,
- transmit the motor-roller control command to a motor-roller controller indicated by the motor-roller controller indication.

2. The motor-roller control proxy according to claim 1, wherein the motor-roller control message is addressed to the motor-roller control proxy.

3. The motor-roller control proxy according to one of claims 1 or 2, wherein
- the motor roller control proxy is configured to obtain a motor-roller controller topology indication of at least one of the at least one motor-roller controller.

4. The motor-roller control proxy according to one of claim 3, wherein
- the motor-roller controller topology indication is at least one of
- inferred by the motor-roller control proxy or
- obtained from the at least one motor-roller controller.

5. The motor-roller control proxy according to one of claims 1 to 4, wherein
- the motor roller control proxy is configured to assign a motor-roller controller indication to at least one of the at least one motor-roller controller and/or to obtain a motor-roller controller indication from at least one of the at least one motor-roller controller.

6. The motor-roller control proxy according to one of claims 1 to 5, wherein
- the motor roller control proxy is configured to transmit at least one of an motor-roller controller indication or a motor-roller controller topology information of at least one of the at least one motor-roller controller to the central control unit.

7. The motor-roller control proxy according to one of claims 1 to 6, wherein
- the motor roller control proxy is configured to generate and/or store a set of associations between a respective a motor-roller controller indication and a respective topology information of at least one of the at least one motor-roller controller.

8. The motor-roller control proxy according to claim 7, wherein
- transmitting the motor-roller control command to the motor-roller controller indicated by the motor-controller indication is at least partially based on the set of associations.

9. The motor-roller control proxy according to one of claims 1 to 8, wherein
- the motor-roller control proxy is configured to obtain a total number of motor-roller controllers to which it is communicatively connected.

10. The motor-roller control proxy according to one of claims 1 to 9, wherein
- the motor-roller control proxy is configured to disconnect from at least one or from all of the motor-roller controllers in case the number of associations stored does not match the obtained total number of motor-roller controllers.

11. A central control unit, in particular for a motor-roller conveyor system,, wherein the central control unit is configured to
- construct a motor-roller control message, wherein the motor-roller control message comprises a motor-roller controller indication and a motor-roller control command and
- transmit the motor-roller control message to a motor-roller control proxy.

12. The central control unit according to claim 10, wherein
- the central control unit is free of direct communicative links to motor-roller controllers and/or
- the central control unit is configured to control at least one motor-roller controller via the motor-roller control proxy.

13. The central control unit according to one of claims 11 or 12, wherein the central control unit is configured to control at least one motor-roller controller indicated by a motor-roller controller indication.

14. The central control unit according to one of claims 11 to 13, wherein the central control unit is configured to receive at least one of an motor-roller controller indication or a motor-roller controller topology information of at least one motor-roller controller from the motor-roller control proxy.

15. A system comprising
- at least one motor-roller controller,
- a central control unit according to one of claims 11 or 14, and
- at least one motor-roller control proxy according to one of claims 1 to 10
